Europäisches Patentamt

European Patent Office

Office européen des brevets

(19)

(11) EP 0 970 004 B1

(12) FASCICULE DE BREVET EUROPEEN

(45) Date de publication et mention
de la délivrance du brevet:
**21.11.2001 Bulletin 2001/47**

(21) Numéro de dépôt: **98917208.5**

(22) Date de dépôt: **23.03.1998**

(51) Int Cl.⁷: **B64C 23/06**

(86) Numéro de dépôt international:
**PCT/FR98/00578**

(87) Numéro de publication internationale:
**WO 98/42568 (01.10.1998 Gazette 1998/39)**

(54) **DISPOSITIF D'ELIMINATION DES TURBULENCES DANS LE SILLAGE D'UN AVION**

TURBULENZUNTERDRUCKER FÜR TRAGFLUGELS EINES FLUGZEUGES

DEVICE FOR ELIMINATING VORTEX IN AN AEROPLANE TRAIL

(84) Etats contractants désignés:
**FR GB**

(30) Priorité: **24.03.1997 FR 9703794**

(43) Date de publication de la demande:
**12.01.2000 Bulletin 2000/02**

(73) Titulaire: **Chorosz, Henri**
**06610 La Gaude (FR)**

(72) Inventeur: **Chorosz, Henri**
**06610 La Gaude (FR)**

(56) Documents cités:
**DE-A- 3 127 257**      **FR-E- 52 257**
**FR-E- 57 646**        **US-A- 2 075 817**
**US-A- 3 596 854**     **US-A- 3 881 669**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

### Domaine technique

La présente invention concerne les dispositifs permettant d'éliminer ou de limiter très fortement la génération des turbulences se produisant dans le sillage de l'extrémité des ailes d'avion et en particulier un dispositif d'élimination des tourbillons marginaux dans le sillage d'un avion.

### Etat de la technique

Dans un avion il existe un phénomène appelé tourbillon marginal ou vortex qui absorbe une partie de l'énergie de propulsion. Ce tourbillon marginal est dû à la différence de pression entre la face supérieure de l'aile et sa face inférieure. La pression étant plus élevée sur la face inférieure de l'aile que sur sa face supérieure, l'air à tendance à se déplacer en bout d'aile de la face inférieure vers la face supérieure, ce qui crée un tourbillon tournant dans le sens des aiguilles d'une montre à l'extrémité de l'aile gauche en sens inverse à l'extrémité de l'aile droite.

Les vortex créent des turbulences qui ont des effets négatifs. Ils provoquent d'abord un accroissement de la traînée ou résistance à l'avancement qui doit être compensée par un surcroît d'énergie de propulsion donc une diminution de rendement énergétique. Ensuite, cette traînée se produisant dans le sillage des ailes représente des risques considérables pour les avions qui décollent ou atterrissent, en particulier derrière les avions à fort tonnage qui provoquent de fortes turbulences.

Différents dispositifs ont déjà été élaborés dans le but de réduire les vortex. Ainsi le brevet US 2.075.817 utilise un dispositif de succion constitué par un tube Venturi combiné à une entrée d'air provenant des extrémités des ailes à l'endroit du rétrécissement du tube Venturi. C'est donc un système complexe qui est mis en oeuvre et qui, en outre, consomme de l'énergie comme tout système Venturi et nuit au rendement énergétique de l'avion.

Un autre dispositif décrit dans le brevet US 3.596.854 consiste à placer en bout d'aile un générateur de vortex qui récupère l'air à plus haute pression se trouvant sur la face inférieure de l'aile l'empêchant ainsi de former les turbulences à l'extrémité de l'aile. Le générateur de vortex permet ainsi d'obtenir un vortex artificiel à la sortie du dispositif et d'éliminer les turbulences qui ne manqueraient pas de se produire sans la présence d'un tel dispositif. Malheureusement un tel dispositif est complexe et consomme forcément une énergie non négligeable pour la génération du vortex. En outre, en ralentissant la circulation d'air par augmentation de la section du flux, il ne reste plus assez de force acquise pour créer un vortex efficace. En résumé, un tel dispositif crée plus de traînée qu'il n'en supprime.

### Exposé de l'invention

L'invention a donc pour but principal d'éliminer les turbulences dans le sillage d'une surface portante en mouvement.

Un autre but de l'invention est de fournir un dispositif simple permettant de réduire fortement le vortex se formant dans le sillage d'une surface portante en mouvement telle qu'une aile d'avion tout en ne consommant quasiment pas d'énergie.

L'objet de l'invention est par conséquent un dispositif du type comprenant un moyen tubulaire placé à l'extrémité d'une surface portante en mouvement adapté pour recevoir de l'air à l'avant de la surface portante et éjecter de l'air à l'arrière de manière à réduire le vortex dû à la différence des pressions entre la face supérieure et la face inférieure de la surface portante, ledit moyen tubulaire étant un simple tuyère cylindrique de section circulaire.

### Brève description des figures

Les buts, objets et caractéristiques de l'invention apparaîtront plus clairement à la lecture de la description qui suit en référence aux dessins dans lesquels :

la figure 1 représente une vue de dessus d'un avion muni de dispositifs selon l'invention pour éliminer les turbulences dans le sillage des ailes,
la figure 2 représente une vue de face de l'avion muni de dispositifs selon l'invention illustré sur la figure 1,
la figure 3 représente l'extrémité de l'aile d'un avion munie d'un tuyère conforme à l'invention,
la figure 4 représente une coupe de l'aile d'avion munie d'une tuyère illustrée sur la figure 3, et
la figure 5 est un diagramme représentant la portance en fonction de la traînée pour des ailes d'avion avec ou sans tuyères selon l'invention.

### Description détaillée de l'invention

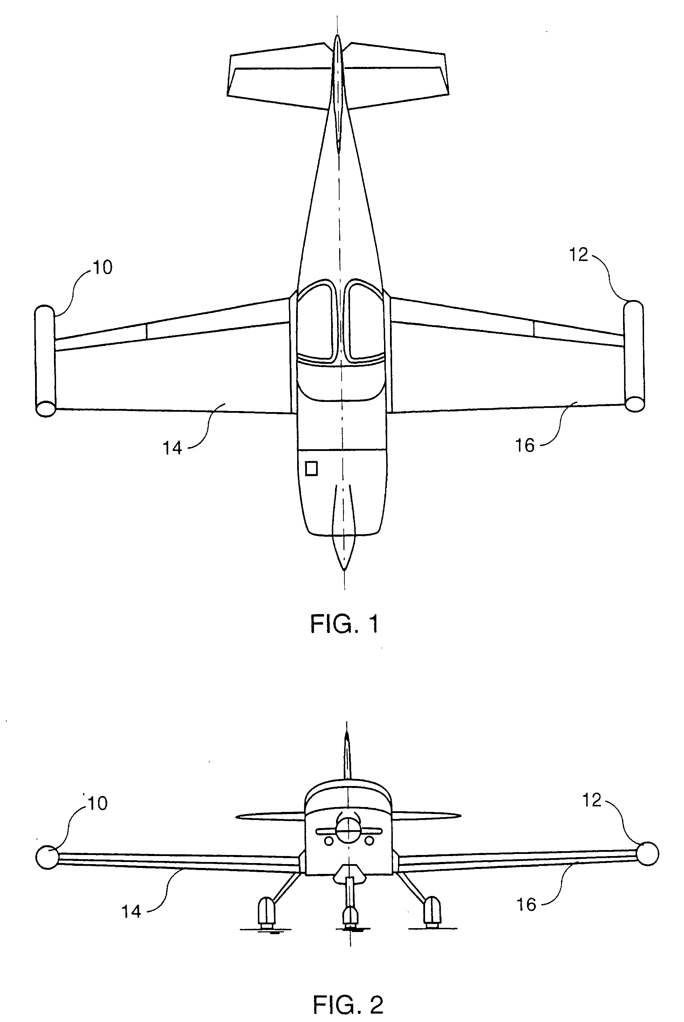

Selon le mode de réalisation préféré représenté sur les figures 1 et 2, le dispositif selon l'invention est constitué de deux tuyères 10 et 12 situées respectivement à l'extrémité des ailes 14 et 16 d'un avion.

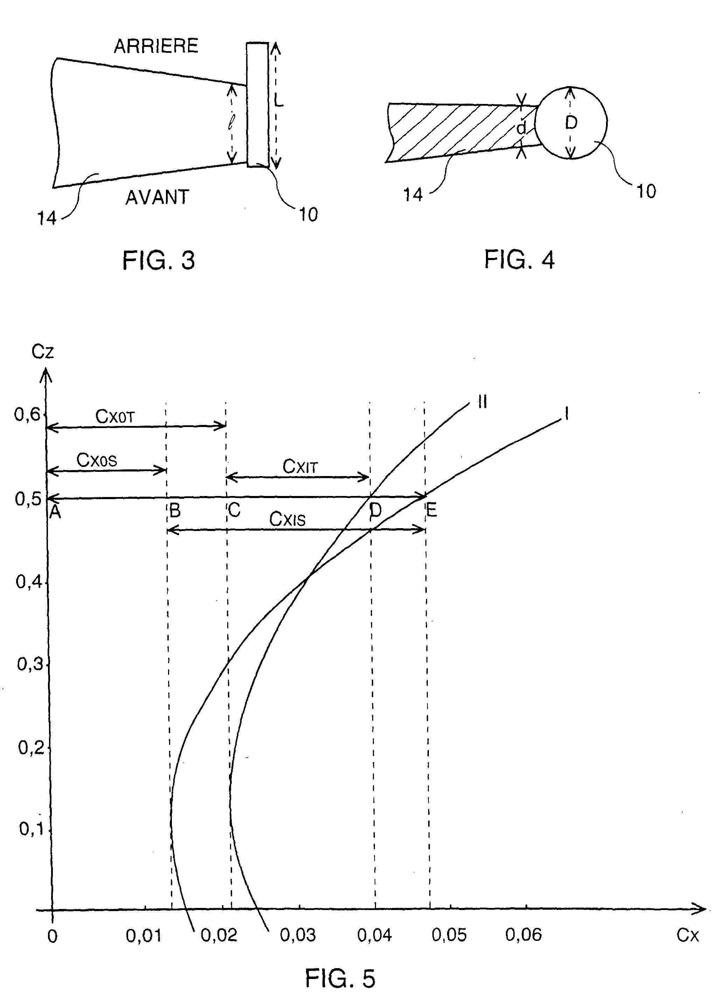

Chaque tuyère 10 (ou 12) illustrée sur la figure 3 a la forme d'un cylindre de section circulaire. La longueur « L » de la tuyère est supérieure à la largeur «ℓ» de l'extrémité de l'aile (la corde) de telle sorte que le rapport $L/\ell$ soit compris entre 1 et 1,5 et de préférence égal à 1,33. De préférence, l'avant de la tuyère se trouve au droit de l'avant de l'aile alors que l'arrière de la tuyère se situe en retrait de l'arrière de l'aile de l'avion.

La tuyère illustrée en coupe sur la figure 4, a un diamètre « D » plus important que l'épaisseur « d » de l'aile de telle sorte que le rapport D/d soit compris entre 1,20 et 2, et de préférence égal à 1,75. Ainsi, pour une épaisseur « d » égale à 0,103m, l'efficacité maximale est obtenue avec une tuyère d'un diamètre de 0,180m.

Les essais en soufflerie ont démontré que la présence de tuyères conformes à l'invention situées à l'extrémité des ailes évitait les turbulences causées par le tourbillon marginal ayant lieu à l'extrémité et dû à la différence de pression entre la face supérieure de l'aile et sa face inférieure. Un vortex continue à se former à l'arrière de la tuyère et donc à consommer une partie de l'énergie de propulsion de l'avion. L'énergie consommée étant proportionnelle à la vitesse périphérique de l'air dans le vortex, et la vitesse étant inversement proportionnelle au rayon du vortex, on a donc la relation suivante entre l'énergie consommée « E » et le rayon « r » de vortex :

$$E = k/r^2$$

Il est donc judicieux que le diamètre de la tuyère soit le plus important possible, mais sans toutefois dépasser un rapport à l'épaisseur de l'aile d'approximativement 1,5 comme on l'a vu précédemment, au dessus duquel l'énergie à mettre en oeuvre pour compenser la traînée engendrée par la tuyère devient plus importante que le gain d'énergie dû à la tuyère. En outre, les meilleurs résultats sont obtenus avec un calage de tuyère négatif de -1° par rapport au calage de l'aile.

Le diagramme de la figure 5 illustre parfaitement l'efficacité de la présence de tuyères. Sur ce diagramme, les courbes I et II représentent le coefficient de portance $C_Z$ en fonction du coefficient de traînée $C_X$, sans tuyères dans le cas de la courbe I et avec la présence de tuyères selon l'invention dans le cas de la courbe II.

La traînée totale $C_x$ est la somme de la traînée $C_{X0}$ occasionnée par le frottement de l'air sur l'aile et la traînée $C_{Xi}$ induite par la portance de l'aile. Cette dernière est due pour la presque totalité aux fuites en bout d'aile (pour des ailes de longueur infinie, elle serait nulle). La traînée $C_{X0}$ est constante quelle que soit la portance. Ainsi en est-il dans l'exemple illustré sur la figure 5, de la traînée $C_{X0S}$ sans tuyère (segment AB) et de la traînée $C_{X0T}$ avec tuyère (segment AC).

Bien sûr, la traînée $C_{X0T}$ avec la présence des tuyères est supérieure à la traînée $C_{X0S}$ sans les tuyères.

Comme on le voit sur la figure 5, la traînée $C_{Xi}$ sans les tuyères (courbe I) augmente plus vite que la traînée $C_{Xi}$ avec présence des tuyères (courbe II). Pour un coefficient de portance $C_Z = 0,5$ qui est une valeur commune à la majorité des avions, la traînée $C_{XiT}$ obtenue avec la présence des tuyères (représentée par le segment CD) est inférieure à la traînée $C_{XiS}$ obtenue sans la présence des tuyères (représentée par le segment BE) selon un rapport CD/BE égal à 0,578, soit un gain de 42%. Par conséquent, le rapport de la traînée totale $C_X$ avec la présence des tuyères (représentée par le segment AD) à la traînée totale $C_X$ sans tuyères (représentée par le segment AE) est égal a 0,86, soit un gain de 14% malgré la présence des tuyères créant une surface ajoutée de 32% (rapport AC/AB).

Le dispositif selon l'invention a permis d'obtenir un effet surprenant sur la valeur de la traînée induite. En effet, il est connu d'exprimer la traînée induite, à une constante près, de la façon suivante :

$$C_{Xi} = \frac{k}{\pi} \cdot \frac{Cz^2.S}{B^2}$$

dans laquelle S est la surface des ailes et B est l'envergure de l'avion. Pour une aile dite parfaite, le coefficient k a une valeur égale à 1. Il s'avère que la présence des tuyères selon l'invention a permis de diminuer la valeur de k au dessous de 1 jusqu'à 0,727.

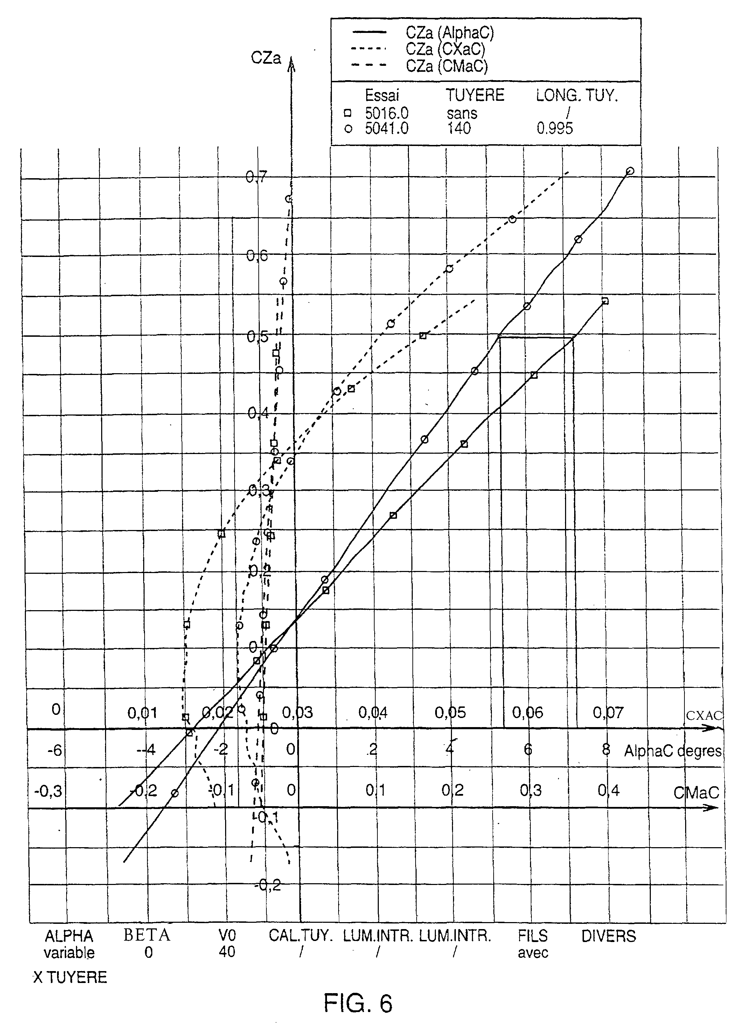

On doit noter, comme le montre le graphique de la figure 6 qui illustre les résultats obtenus au centre d'essais aéronautique de Toulouse, que la présence des tuyères selon l'invention permet d'obtenir la même portance qu'en l'absence de tuyères en utilisant un angle d'attaque inférieur, par exemple un angle de 5,40° au lieu d'un angle de 7,3°, ce qui est une autre façon de mesurer le gain apporté par les tuyères selon l'invention.

Les turbulences qui se manifestent à l'extrémité des ailes se manifestent également à l'extrémité des gouvernes de profondeur et de direction se trouvant en queue de l'avion. Il peut donc être judicieux de placer des tuyères selon l'invention aux extrémités de l'empennage de l'avion.

Les essais ont également montré que le gain optimal obtenu par la présence des tuyères était meilleur avec certaines formes d'ailes. Ainsi, la forme d'aile rectangulaire qui est la plus facile à construire s'adapte parfaitement à la présence des tuyères à l'extrémité dans la mesure où ces dernières permettent d'améliorer grandement le coefficient de traînée qui autrement reste important si on le compare à celui d'une aile elliptique très coûteuse à construire.

En utilisant le dispositif selon l'invention, la configuration obtenue avec la présence des tuyères en bout d'ailes s'apparente à un biplan avec deux ailes collatérales (celle d'extrémité étant cylindrique) au lieu d'être superposées. Ceci est important à signaler dans la mesure où les turbulences qui, normalement, se produisent aux extrémités d'une voilure portante, ne peuvent pas se produire sur une aile cylindrique.

Bien que le mode de réalisation préféré de l'invention soit l'application aux ailes d'avion, il va de soi que l'invention peut être appliquée partout où le but est d'éliminer les turbulences se trouvant dans le sillage d'une surface portante en mouvement, notamment dans le cas de pales d'hélice ou de ventilateur, de carène de

bateau, etc...

0,727.

## Revendications

1. Dispositif d'élimination de turbulences de sillage d'une surface portante en mouvement, telle qu'une aile d'avion (14 ou 16), du type comprenant un moyen tubulaire placé à l'extrémité de la surface portante adapté pour recevoir l'air à l'avant de la surface portante et l'éjecter à l'arrière de ladite surface portante de manière à réduire le vortex dû à la différence des pressions entre la face supérieure et la face inférieure de ladite surface portante ; ledit dispositif étant **caractérisé en ce que** ledit moyen tubulaire est une tuyère cylindrique de section circulaire (10 ou 12).

2. Dispositif selon la revendication 1, dans lequel la tuyère (10 ou 12) a une longueur L dont le rapport à la largeur $\ell$ de l'extrémité de ladite surface portante (14 ou 16) est compris entre 1 et 1,5.

3. Dispositif selon la revendication 2, dans lequel le rapport L/$\ell$ est égal à 1,33.

4. Dispositif selon la revendication 3, dans lequel chacune desdites tuyères (10 ou 12) a sa partie avant située au droit de ladite surface portante (14 ou 16) et sa partie arrière située en retrait de l'arrière de ladite surface portante.

5. Dispositif selon l'une des revendications 1 à 4, dans lequel chacune desdites tuyères (10 ou 12) a un diamètre « D » dont le rapport à l'épaisseur « d » de l'extrémité de ladite surface portante (14 ou 16) est compris entre 1,2 et 2.

6. Dispositif selon la revendication 5, dans lequel le rapport D/d est égal à 1,75.

7. Dispositif selon l'une des revendications précédentes, dans lequel ladite surface portante est l'aile (14 ou 16) d'un avion.

8. Dispositif selon la revendication 7, dans îequel la traînée induite de l'aile a un coefficient ayant la valeur suivante à une constante près :

$$C_{Xi} = \frac{k}{\pi} \cdot \frac{Cz^2 \cdot S}{B^2}$$

S étant la surface des ailes, Cz le coefficient de portance et B l'envergure de l'avion, pour laquelle k est inférieur à 1.

9. Dispositif selon la revendication 8, dans lequel k =

## Patentansprüche

1. Eine Vorrichtung zur Eliminierung der Strömungs-Störungen am Ende eines sich bewegenden Auftriebskörper, wie z.B. eines Flugzeugflügels ( 14 oder 16 ), das wie ein rundes Rohr ähnliche Vorrichtung aussieht, die am extremen Ende eines sich bewegendem Auftriebskörper befestigt ist und die Eigenschaft aufweist,die umströmende Luft dieses Auftriebskörper am vorderer Teil ufzunehmen und am Ende auszustossen um dadurch eine Reduzierung der Strömungswirbel, hervorgerufen durch den Differenzdruck der oberen resp. unteren Fläche / Teil des, zu erreichen. Diese Vorrichtung weist eine Rohr ähnliche Konstruktion auf die aus zwei zylindrische, hohlen Düsen besteht ( 10 oder 12 ).

2. Diese Vorrichtung gemäss Beanspruchung Pt. 1, weisen ein Verhältnis der beiden Düsen ( 10 und 12 ) Länge " L " gegenüber des äusseren Ende des bewegtem Auftriebskörper " $\ell$ " ( 14 und 16 ) von 1 und 1.5 auf.

3. Eine Vorrichtung gemäss Beanspruchung Pt. 2 , wobei das Verhältnis L/ $\ell$ gleich 1.33 ist.

4. Eine Vorrichtung gemäss Beanspruchung Pt. 3 , wobei die Düseneintrittsöffnungen ( 10 und 12 ) genau mit der vorderer Kante des Auftriebskörper übereinstimmt und die Düsenende sich frei in der Luft befindet.

5. Eine Vorrichtung gemäss Beanspruchung Pt. 1 bis 4, wobei jede dieser Düsen ( 10 und 12 ) einen Durchmesser " D " aufweist, dass im Verhältnis zu der Dicke des äussersten Ende dieses Auftriebskörper " d " ( 14 und 16 ) von 1.2 bis 2 steht.

6. Eine Vorrichtung gemäss Beanspruchung Pt. 5, wobei das Verhältnis D / d genau 1.75 ist.

7. Eine Vorrichtung einer oben erwähnten Beanspruchungen Pt. 1-6 , wobei es sich beim bewegendem Auftriebskörper um ein Flugzeugflügel handelt7.

8. Eine Vorrichtung gemäss Beanspruchung Pt. 7, wobei der Flugzeugflügel ein Induzierten Wiederstand " k " kleiner als 1 aufweist :

$$C_{Xi} = \frac{k}{\pi} \cdot \frac{Cz^2 \cdot S}{B^2}$$

wobei. S = Flügelfläche Cz = Auftriebscoeffizient B = Flügelspanweite.

**9.** Eine Vorrichtung gemäss Beanspruchung Pt. 8, wobei die Konstante K = 0.727 ist.

## Claims

**1.** A device to eliminate the trailing disturbances of a moving lifting body such as an airplane wing (14 or 16), as a tubular device located at the extremity of this moving lifting body and be able to receive the air at the front of the moving body and to eject this air at its back, in order to reduce the vortex created by the pressure difference between the bottom and the top parts of the moving body. This device **characterized by** the tubular shape, is composed of two cylindrical hollow nozzles having circular sections (10 or 12).

**2.** A device according to claim 1, wherein the nozzle (10 and 12) have a length "L" whose ratio width "$\ell$" of the moving bodies extremities (14 and 16) is between 1 and 1.5.

**3.** A device according to claim 2, wherein the ratio L/$\ell$ is equal to 1.33.

**4.** A device according to claim 3, wherein the front of the said nozzles (10 and 12) is perfectly in line with the wing front whereas the back end of the nozzles is protruding in the air.

**5.** A device according to claims 1 to 4, wherein each of the said nozzles (10 and 12) has a diameter "D" whose ratio to the thickness "d" of the extremities of the said moving bodies (14 and 16) is between 1.2 and 2.

**6.** A device according to claim 5, wherein the ratio D/d is equal to 1.75

**7.** A device according to one of the previous claims, wherein the said moving body is a wing (14 or 16) of an airplane.

**8.** A device according to claim 7, wherein the wing induced drag coefficient "k" smaller than 1:

$$Cd_i = \frac{k}{\pi} \cdot \frac{Cz^2 \cdot S}{B^2}$$

where S is the wings surface, Cz the lift coefficient, and B is the airplane span.

**9.** A device according to claim 8, wherein the constant k = 0.727.

10

12

14

16

FIG. 1

10

12

14

16

FIG. 2

ARRIERE

$L$

$\ell$

14

AVANT

10

**FIG. 3**

$d$

$D$

14

10

**FIG. 4**

$Cz$

0,6

$C_{X0T}$

$C_{X0S}$

$C_{XIT}$

0,5

A   B   C   D   E

$C_{XIS}$

0,4

II

I

0,3

0,2

0,1

0    0,01    0,02    0,03    0,04    0,05    0,06    $Cx$

**FIG. 5**

FIG. 6